# EUROPEAN PATENT SPECIFICATION

(11) **EP 1 719 679 B1**
(45) Date of publication and mention of the grant of the patent: **27.01.2010**
(21) Application number: 06113524.0
(22) Date of filing: 04.05.2006
(51) Int. Cl.: B60T 13/74

(54) **Electric parking brake**
Elektrische Feststellbremse
Frein de stationnement électrique

(30) Priority: 06.05.2005 IT PD20050127; 13.05.2005 IT PD20050039 U
(43) Date of publication of application: 08.11.2006
(73) Proprietor: NUOVA S.M.E.- S.p.A., 12025 Dronero (Prov. of Cuneo) (IT)
(72) Inventor: Surian, Antonio, 45100 Rovigo (IT); Basso, Maurizio, 36031 Dueville VI (IT)
(74) Representative: Modiano, Micaela Nadia

(56) References cited:
- EP-A- 1 462 330
- WO-A-91/04167
- WO-A-02/095256
- WO-A-2005/014354
- US-A1- 2003 070 885

## Description

The present invention relates to an electric parking brake, particularly for cars.

So-called electric parking brakes are currently increasingly widespread, particularly in cars which provide great comfort for the driver; in these parking brakes, actuation is controlled by an electric motor or gearmotor, which is operated by means of a pulse which is sent by a switch arranged within the user's reach and directed to an electronic control unit for controlling said electric brake.

In currently known electric parking brakes, the electric motor is generally functionally connected, by interposing reduction means and force distribution means, to at least one traction cable for actuating the braking operation on corresponding wheels of the car.

WO 2005/014354 A1 describes a state of the art parking brake actuator.

Currently known electric parking brakes are constituted almost entirely by components made of metallic material, and therefore, in addition to being heavy, are relatively complicated and expensive to obtain by using machine tools or by sintering (sprockets and gears in general).

Further, such known brakes have a substantial bulk, which is extended in three dimensions, forcing rather tight dimensional constraints during the design of the car on which the brake is to be installed.

Moreover, in currently known electric parking brakes, the reduction means are of the reversible or irreversible type.

If the reduction means are of the reversible type, the brake also comprises safety locking means, so that the locked configuration assumed by the motor, by the reduction means and by the force distribution means cannot be altered by stresses which arrive via the traction cables from the locking devices that act on the wheels.

These safety locking means ensure the irreversibility of the transmission of motion and of torque, so as to prevent said transmission from the force distribution means toward the electric motor via said reversible reduction means.

Known electric parking brakes provided with reversible reduction means and with helical friction spring-type locking means for irreversibility of transmission, however, are not provided with safety release means which can allow the driver to release the wheels from the parking braking action even if the electric motor that operates the brake has no power available.

As regards electric parking brakes with irreversible reduction means, an emergency release device is known which disengages the traction cables from the motor.

Due to safety requirements, this known device requires the provision of an appropriate sensor dedicated to emergency release and/or the installation of a sensor suitable to detect directly the braking force, in order to prevent uncoupling from occurring without the driver or the electronic control unit of the car being informed.

The aim of the present invention is to provide an electric parking brake, particularly for cars, which is more compact and lightweight than known types of electric parking brake.

Within this aim, an object of the present invention is to provide an electric parking brake which can be installed easily also an existing cars.

Another object of the present invention is to provide an electric parking brake whose efficiency and safety are at least equal to those of known brakes.

Another obj ect of the present invention is to provide a parking brake which can be assembled rapidly and cheaply.

Another obj ect of the present invention is to provide a parking brake provided with release means for the safety locking means, which are suitable to allow the manual disengagement of the brake if the electric power supply for the brake motor is not available.

Another object of the present invention is to provide a brake which has release means which can be accessed easily and maneuvered easily for a user who needs to resort to them.

Another object of the present invention is to provide a brake in which the release means cannot be operated inadvertently and are therefore safe also with respect to the presence of minors or animals, or in any case if unexpected events occur within the cabin.

Another object of the present invention is to provide a brake provided with release means whose activation is detectable immediately by the electronic control unit of the car.

Another obj ect of the present invention is to provide a parking brake in which the release means do not require the uncoupling of the traction cables from the electric motor.

Another object of the present invention is to provide an electric parking brake particularly for cars which can be manufactured with known systems and technologies.

This aim and these and other objects, which will become better apparent hereinafter, are achieved by an electric parking brake particularly for cars, which is contained at least partially within a protective box-like body and comprises an electric actuation motor, which is functionally connected, by way of the interposition of reduction means and of force distribution means, to at least one traction cable for actuating the braking operation on corresponding wheels of the car, characterized in that said force distribution means and at least part of said reduction means are supported by a flat frame enclosed within said box-like body.

Further characteristics and advantages of the invention will become better apparent from the following detailed description of a preferred but not exclusive embodiment thereof, illustrated by way of non-limiting example in the accompanying drawings, wherein:

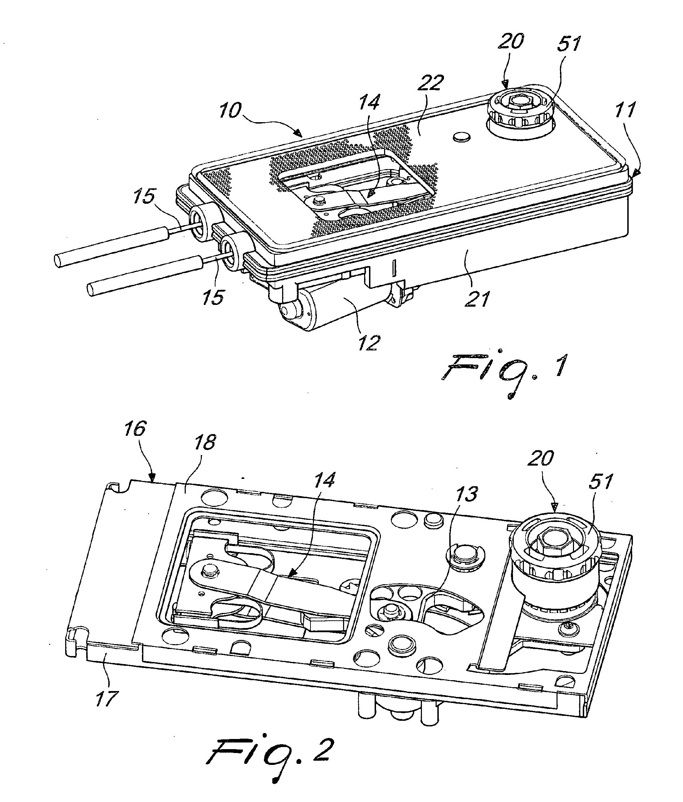

Figure 1 is a perspective view of an electric parking brake according to the invention;
Figure 2 is a perspective view of a first assembled subassembly of a brake according to the invention;

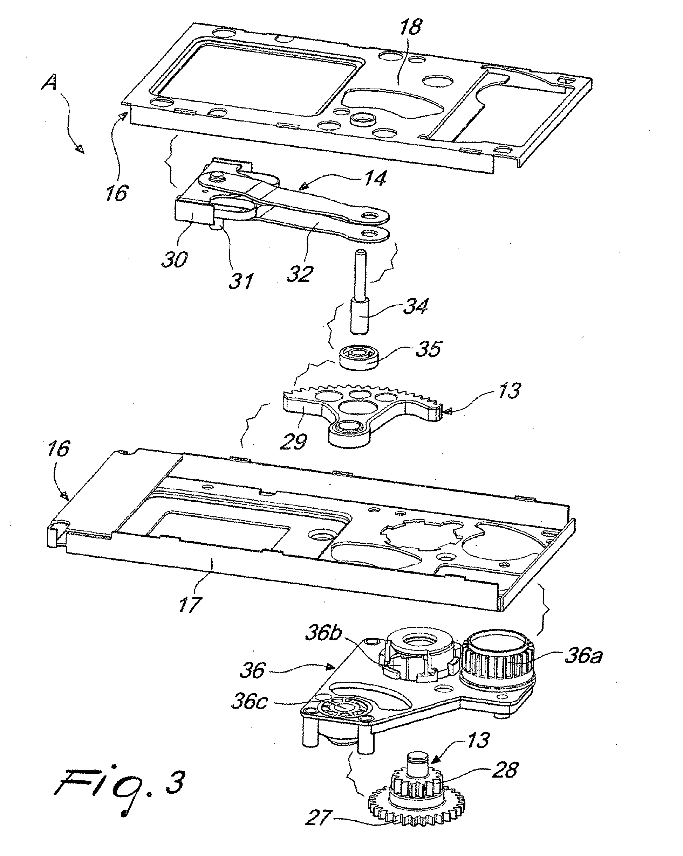

Figure 3 is an exploded perspective view of the first subassembly of Figure 2;

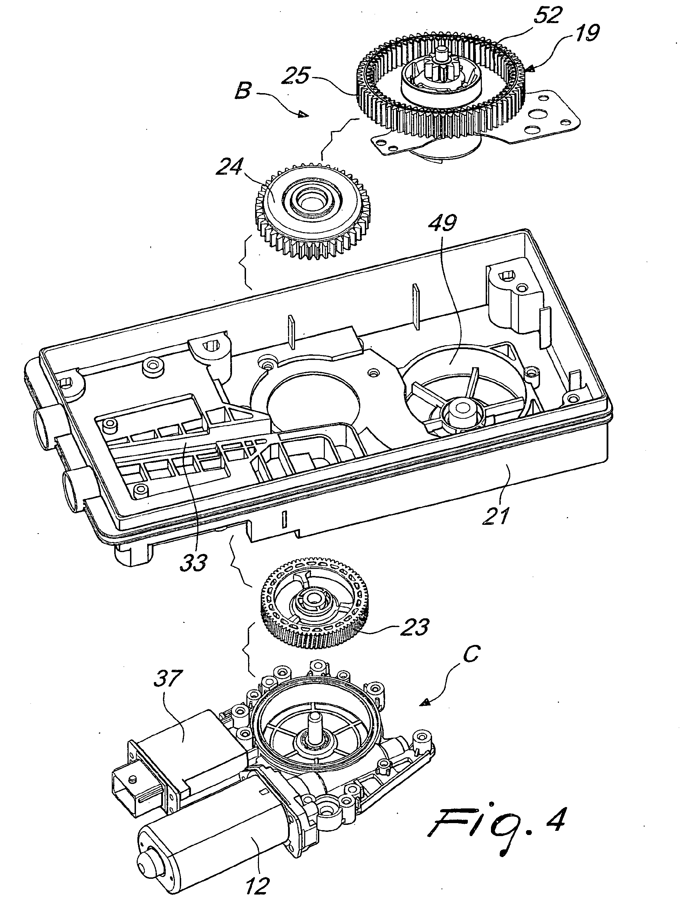

Figure 4 is an exploded perspective view of a third subassembly of a brake according to the invention and of a portion of the box-like body with which said third subassembly is associated;
Figure 5 is an exploded perspective view of a second subassembly of a brake according to the invention;
Figure 5a is a perspective view of an element of the second subassembly of Figure 5;

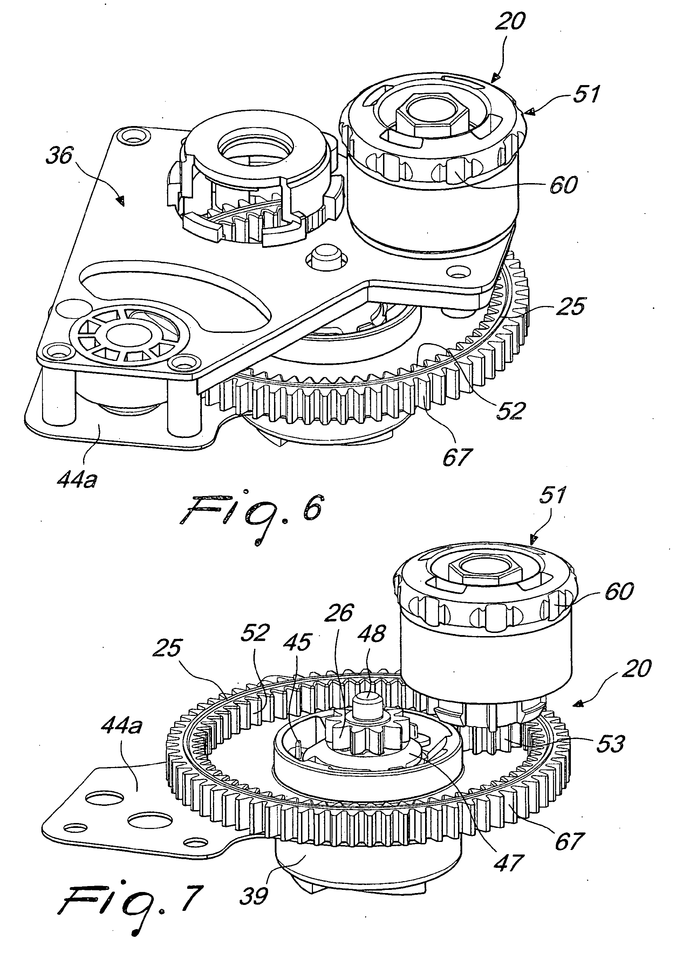

Figure 6 is a perspective view of the second subassembly of Figure 5, assembled with release means of the brake according to the invention;
Figure 7 is another view of the second subassembly with the release means;
Figures 8 and 9 are two sectional views, in two different configurations, of the release means with which the brake according to the invention is provided.

With reference to the figures, an electric parking brake particularly for cars according to the invention is designated generally by the reference numeral 10.

In the embodiment described here, the brake 10 is contained at least partially within a protective box-like body 11.

An electric motor 12 for actuating the braking action is fixed externally to the box-like body 11.

The motor 12, of the reversible type in the exemplary embodiment described here, is connected functionally, by way of the interposition of reduction means 13 and of force distribution means 14, to two traction cables 15 for actuating the braking action on corresponding wheels of the car.

The force distribution means 14 and part of the reduction means 13 are supported by a flat frame 16, which is enclosed within the box-like body 11.

The frame 16 is constituted by two parts made of pressed and folded sheet metal: a first lower part 17, substantially for fixing and support, and a second upper part 18, substantially for covering and coupling for part of the reduction means 13, described in greater detail hereinafter, and for the distribution means 14.

The two parts 17 and 18 can be mutually coupled by way of couplings chosen among threaded couplings, riveted couplings, plastic deformation couplings, seaming, welding, interference pins, or other equivalent connecting elements.

The reduction means 13 are reversible as a whole.

The brake 10 according to the invention also comprises locking means 19 for irreversibility of motion and torque transmission, which are suitable to prevent transmission from the force distribution means 14 toward the electric motor 12 by way of the reversible reduction means 13.

Therefore, conveniently there are also means 20 for the manual emergency release of the transmission irreversibility means 19.

The box-like body 11 is formed by a containment shell 21, inside which the frame 16 is arranged, and by a protective cover 22.

The brake 10 is composed of three main subassemblies.

A first subassembly comprises the force distribution means 14 and a first part of the reduction means 13 in addition to the frame 16 that contains them.

A second subassembly is constituted solely by the locking means 19.

A third subassembly comprises the electric motor 12 and a second part, described in greater detail hereinafter, of the reduction means 13.

The reduction means 13 are constituted by a first reduction stage, which comprises a worm screw, not shown for the sake of simplicity, which is rigidly coupled to the driving shaft of the electric motor 12 and is coupled to a first sprocket 23.

A second reduction stage comprises a second sprocket 24, which is fixed coaxially to the first sprocket 23 and is suitable to engage a gear 25 of the locking means 19 for the input of the torque in the locking means 19.

The locking means 19 have a torque output pinion 26, which is coaxial and rigidly coupled to the gear 25 and in turn meshes with a third sprocket 27, so as to constitute a third reduction stage.

The third sprocket 27 is coaxially rigidly coupled to an additional pinion 28 of a fourth reduction stage, which is engaged with a toothed sector 29, which is pivoted to the frame 16 and on the body of which the force distribution means 14 are pivoted.

The force distribution means 14 are constituted by a rocker 30 with a pivot 31 which performs a translational motion in a guide 33 and is moved by a linkage 32.

The two traction cables 15 directed to the wheels to be locked are rigidly coupled to the rocker 30.

The above described division of the brake 10 into modular subassemblies allows process advantages in relation to the management of supply problems, particularly as regards the aspects of logistics, quality and division of manual and automatic processes aimed at assembly and testing.

In particular, the first subassembly, designated by the reference letter A in the figures, is formed by the two parts 17 and 18 of the frame 16, by the distribution means 14 arranged between the two parts 17 and 18, by the toothed sector 29 complete with the pivot 34 for the connection of the distribution means 14 and the corresponding bearing 35, by the third sprocket 27 and by the additional pinion 28 which is associated therewith.

Such first subassembly further comprises an element 36, which has an annular portion 36a for supporting the manual release means 20, an opening 36b for accommodating the additional pinion 28, and a seat 36c for the pivot of the toothed sector 29.

The element 36 is preset for fixing thereon the locking means 19.

The first subassembly therefore has, as a whole, a predominantly two-dimensional contour, such as to minimize space occupation.

Further, the distribution means 14, the toothed sector 29 and the monolithic body of the third wheel 27 and of the additional pinion 28 are rigidly coupled so that the dynamic stresses (during movement) and the static stresses (for maintaining the braked condition) are discharged almost entirely onto the frame 16, which in turn is fixed to the body of the car.

Part of the stresses that arrive from the toothed sector 29 are directed to the locking means 19, which absorb them, in turn discharging them onto the element 36, which in turn is fixed to the frame 16.

The frame 16 and the first subassembly that comprises it are therefore designed to relieve the box-like body 11 that contains it of any static load.

This allows to manufacture said box-like body by using a material which is lighter than metallic materials, for example plastics.

The second subassembly B is constituted by the locking means 19 for irreversibility of motion and torque transmission, which is assembled and optionally tested separately or purchased as a finished part from a supplier.

The third subassembly C is constituted by the electric motor 12.

Selectively, the third subassembly C can also comprise the first sprocket 23, which can be integrated therein so as to provide the first reduction stage, as in the embodiment of the invention described here, or can be associated with the shell 21 and preassembled therein.

The third subassembly can also comprise an electronic control assembly 37, which is rigidly coupled to the electric motor 12.

The control assembly 37 can optionally be integrated in the shell 21 or located elsewhere in the car.

The assembly of an electric parking brake 10 according to the invention comprises, for example, the following operations.

The locking means 19 are fixed to the first subassembly, i.e., to the element 36, which in turn is rigidly coupled to the frame 16.

The second sprocket 24 and the first subassembly, with the second subassembly already associated therewith, are inserted within the shell 21 so that the pivot 31 of the rocker 30 is located in the appropriately provided guide 33 and so that the second sprocket 24 meshes with the gear 25.

The cables 15 are connected to the rocker 30.

The third subassembly, i.e., the motor 12, is associated.

The box-like body 11 is closed by means of the cover 22 and the release means 20 are associated.

The containment shell 21 and the cover 22 are advantageously obtained by molding plastic material.

As a whole, therefore, the brake 10 is lightweight and cheap.

In a constructive variation of the invention, an additional subassembly of the brake 10 according to the invention is to be considered the one that comprises, within the box-like body 11, the first and third subassemblies as described above.

In this constructive variation, the shell 21 is shaped so as to allow the second subassembly, i.e., the locking means 19 for irreversibility, to be connected functionally to the reduction means 13 from the outside of the shell 21.

The locking means 19 are of the type with a helical friction spring.

The locking means 19 are constituted by a central body 38, which is extended axially and rigidly with respect to the gear 25.

The central body 38 is suitable to be arranged within a cup-shaped element 39, which is provided with two lateral openings 40, within which corresponding protrusions 38a are arranged which protrude radially from the central body 38.

During a rotation imparted to the gear 25, said protrusions are suitable to press against a lateral edge of the corresponding opening 40 a respective end 41 of a helical spring 42, which is arranged so as to surround the cup-shaped element 39.

The ends 41 are folded inward and are available for grip.

The spring 42, the cup-shaped element 39 arranged concentrically thereto, and the central body 38 are contained in a complementary shaped concavity 43 of a back plate 44, which is suitable to be fixed, by means of its perimetric flaps 44a, below the element 36.

Three plate-like wings 45 protrude symmetrically from the cup-shaped element 39 and are suitable to pass through the gear 25 in an axial direction by way of corresponding slotted holes 25a which are shaped like a circular arc.

The wings 45 engage complementary shaped slots 46, which are provided within a flange 47 for connection to the pinion 26 for the output of the torque from the locking means 19.

The gear 25 and the pinion 26 are pivoted coaxially to a same pivot 48, which passes through the central body 38.

The second sprocket 24 and the gear 25, with its central body 38, are made of plastic material, while the cup-shaped element 39, the spring 42, the flange 47 and the pinion 26 are made of metallic material.

The compactness of the brake 10 is achieved by way of the substantially flat shape of said sprockets and by way of the arrangement of the reduction stages so that they have parallel axes and lie on closely spaced planes.

The distribution means 14, the toothed sector 29 and the additional pinion 28 are substantially coplanar and are arranged as mentioned within the frame 16.

The third sprocket 27 and the pinion 26 for the output of the torque from the locking means 19 are substantially coplanar directly below the first lower part 17 of the frame 16.

The gear 25 and the second sprocket 24 are coplanar.

The first, second and third reduction stages are each arranged on closely spaced planes, such as to give the brake 10 a predominantly two-dimensional shape, in accordance with what has been described above.

As mentioned above, a receptacle 49 for the concavity 43 of the back plate 44 and the guide 33 for the pivot 31 of the rocker 30 are formed within the containment shell 21.

The manual release means 20 are constituted by a knob 51, with which a locking pinion 53 is associated, said pinion being supported by means for its reversible manual engagement with an internal set of teeth 52 of the gear 25.

The manual release means 20 are suitable to allow the release of the braking action if there is no power supply for the reversible electric motor 12.

The means 20 for the manual release of the locking means 19 described above are constituted by a release pinion 53, which is supported by means for its reversible manual engagement with the internal set of teeth 52 of the gear 25 of the reduction means.

The means for reversible manual engagement are in turn rigidly coupled to the frame 16 of the brake 10 and allow the release of the braking action if there is no power supply for the reversible electric motor 12.

Such means for reversible manual engagement of the release pinion 53 are constituted by the knob 51, from which an axial stem 54 protrudes, the pinion 53 being provided at its end.

The knob 51 is associated, by way of detachable interlocking means, with the opening 55 of the annular portion 36a of the element 36, which is fixed to the frame 16, the opening 55 facing the corresponding underlying gear 25 of the reduction means 13 with which the release pinion 53 can be engaged detachably.

Elastic contrast means are interposed between the knob 51 and the annular portion 36a in order to facilitate the resetting of the disengagement configuration for the pinion 53.

The snap-acting detachable interlocking means are constituted by four elastically deformable tabs 56, which protrude from the knob 51 symmetrically and parallel to the stem 54 toward the inside of the opening 55.

The tabs 56 are provided, at one end, with a tooth 57 for snap engagement with selectively one of two axially consecutive undercuts: a first undercut 58 for a first configuration for disengagement of the pinion 53 from the gear 25 of the reduction means, and a second undercut 59, which lies closer to the gear 25, for a second configuration for engagement of the pinion 53 with the corresponding gear 25.

In the embodiment described here, the knob 51 is formed by a substantially cylindrical body provided, at its free end, with an ergonomic perimetric portion 60, which is suitable to be gripped manually by a user.

Inside the cylindrical body, between its outer annular jacket 61 and the elastically deformable tabs 56, there is a contoured seat 62 for accommodating the elastic contrast means.

The elastic contrast means are constituted by a helical compression spring 63, which is pressed between the bottom of the seat 62 and a corresponding abutment 64 on the outer rim of the opening 55.

The opening 55 is ring-shaped so as to fit between the outer annular jacket 61 and the tabs 56 of the knob 51.

The first undercut 58 and the second undercut 59 are formed on the substantially cylindrical internal surface of the opening 55.

The knob 51 is provided advantageously, coaxially with respect to the ergonomic perimetric portion 60, with a flush-fit compartment 65, inside which a contoured head 66 rises for operating the knob 51 by means of a corresponding complementarily shaped tool.

In the exemplary embodiment described and illustrated here, the head 66 is hexagonal and can be operated by means of a known type of hex wrench.

The presence of the hexagonal head 66 for a hex wrench allows, for further safety, the release device to be used only by a person who can access the trunk, where the emergency tools are usually stored.

The release pinion 53 can engage the corresponding internal set of teeth 52 of the gear 25 by way of a first pressing action on the knob 51 in order to move the pinion from the disengaged configuration to the engaged configuration, and a second rotation action in order to generate such a torque as to release the braking action.

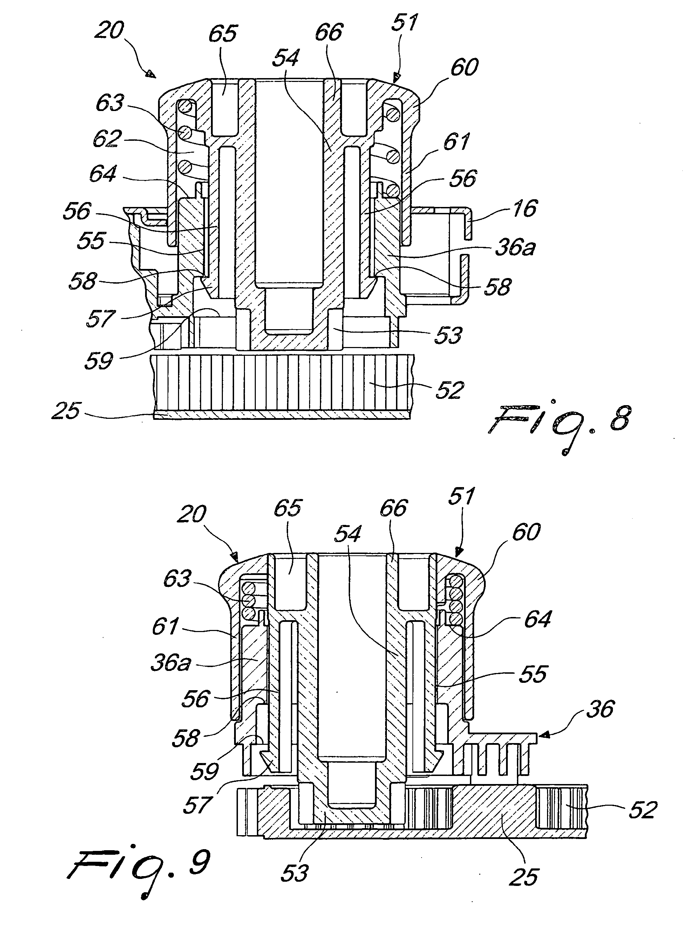

The disengaged configuration of the release pinion 53 is shown in Figure 8, while the engaged configuration is shown in Figure 9.

Further, the pinion 53 must be disengaged from the set of teeth 52 by means of a third traction on the knob 51, which is suitable to return the pinion 53 to the disengaged configuration.

The traction force for this third operation must be such as to achieve the release of the teeth 57 from the second undercut 59, the teeth 57, by rising upward also due to the thrust of the spring 63 on the knob 51 to which they belong, abutting against the first undercut 58 and preventing the disengagement of the knob 51 through the opening 55.

Therefore, the first and second actions can be performed directly by hand or with the aid of a tool of a common type.

The release means 20 couple advantageously to the reduction means and to the reversible motor 12; in this manner, the reduction ratio between the set of teeth of the pinion 53 and the toothed sector 29 is favorable, and with a small number of movements (less than twenty-five turns of the knob) and a modest effort on the knob 51 it is possible to release the wheels from the locking performed by the brake 10.

The need to perform the two described operations in order to release parking brake 10 makes the device safe against the intervention of children or animals or of any other unexpected and unpredictable event that might occur within the cabin.

In the present simplifying and non-limiting embodiment, the knob 51 is obtained by molding plastic material.

In this manner, the outer annular jacket 61, the stem 54, the pinion 53, the tabs 56, the ergonomic portion 60 and the contoured head 66 of the knob 51 form a single body.

As shown, the release pinion 53 engages the internal set of teeth 52 of the gear 25, the external set of teeth 67 of which receives its motion from the electric motor 12 either directly or by way of the interposition of at least one reduction stage.

The gear 25 is an integral part of the locking means 19 for irreversibility of motion and torque transmission described above.

The gear 25 is obtained advantageously, as already mentioned above, by molding plastic material.

The operation of the locking means 19 is as follows.

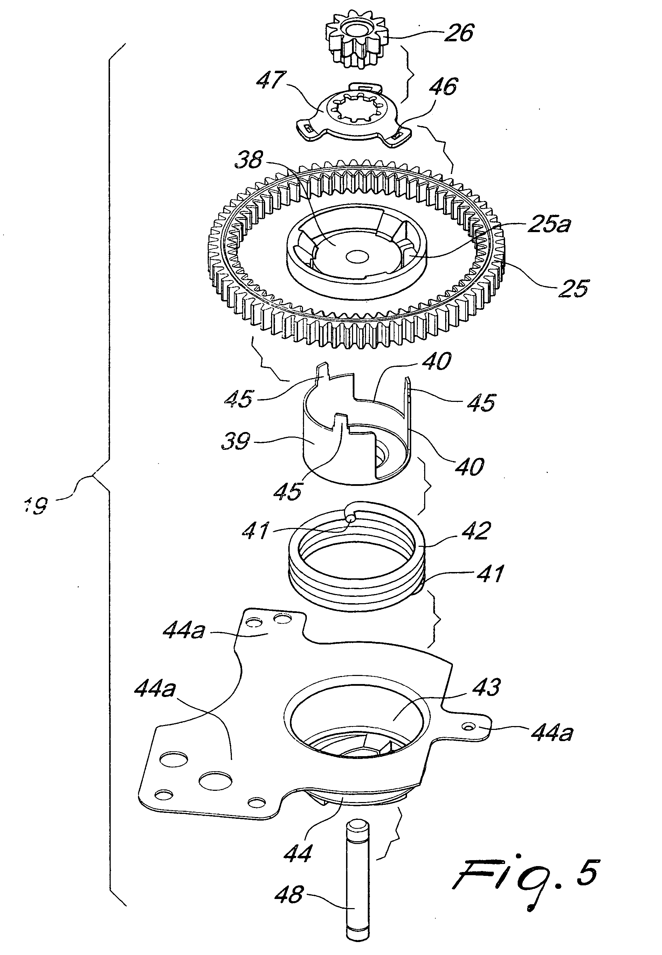

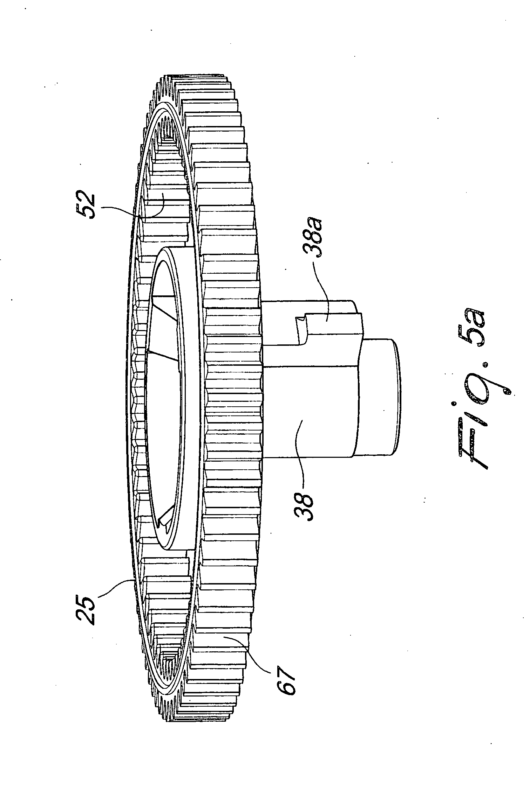

When motion arrives from the motor 12, i.e., reaches the outer set of teeth 67 of the gear 25, the central body 38, by way of its protrusions 38a (one of which is visible in Figure 5a), turns both the spring 42 and the cup-shaped element 39, allowing the gear 25 to rotate freely.

By way of the flange 47 rigidly coupled to the cup-shaped element 39, the rotation is transmitted to the reduction pinion 26.

If the torque arrives from the force distribution means 14, i.e., from the toothed sector 29, and through said toothed sector reaches the reduction pinion 26, with or without the interposition of additional reduction stages, the pinion 26 would be suitable to turn only the cup-shaped element 39, by acting on the ends 41 of the spring 42 so as to widen it, sending it so as to produce friction against the internal walls of the concavity 43 in which the spring 42, the cup-shaped element 39 and the central body 38 are accommodated.

The electric motor 12, the reduction means 13 and the locking means are always mutually meshed and therefore the action of the release pinion 53 acts also on the electric motor 12; accordingly, the electronic control unit of the car, which monitors the angular position of the motor 12 by way of suitable sensors, is able to avoid losing its absolute reference, i.e. its so-called initialization, and is capable of learning that the operation for the manual release of the brake 10 has occurred.

The driver can therefore be informed duly by the control unit, by way of suitable visual or acoustic indication means, whether a manual release operation has occurred.

In practice it has been found that the invention thus described solves the problems noted in known types of electric parking brake for cars.

In particular, the present invention provides an electric parking brake particularly for cars which is more compact and lighter than known types of electric parking brake.

Moreover, the present invention provides an electric parking brake which can be installed easily also on existing cars.

Further, the present invention provides an electric parking brake whose efficiency and safety are at least equal to those of known brakes.

Further, the present invention provides a parking brake which can be assembled rapidly and cheaply.

Moreover, the present invention provides an electric parking brake which allows manual disengagement of the brake if there is no electric power supply for the brake motor.

Further, the present invention provides an electric parking brake whose release means can be accessed easily and maneuvered easily for a user who needs to resort to them.

Further, the present invention provides an electric parking brake whose release means cannot be operated inadvertently and are therefore safe also with respect to the presence of children or animals or in any case with respect to the occurrence of unexpected events within the cabin.

Moreover, the present invention provides an electric parking brake provided with release means whose activation can be detected immediately by the electronic control unit of the car.

Further, the present invention provides an electric parking brake whose release means do not force the uncoupling of the traction cables from the electric motor.

Moreover, the present invention provides an electric parking brake particularly for cars which can be manufactured with known systems and technologies.

In practice, the materials employed, so long as they are compatible with the specific use, as well as the dimensions, may be any according to requirements and to the state of the art.

TheItalian Patent Application No. PD2005A000127 and in Italian Utility Model Application No. PD2005U000039 are the documents from which this application claims priority.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric parking brake particularly for cars, which is contained at least partially within a protective box-like body (11) and comprises an electric actuation motor (12), which is functionally connected, by way of the interposition of reduction means (13) and of force distribution means (14), to at least one traction cable (15) for actuating the braking operation on corresponding wheels of the car, **characterized in that** said force distribution means (14) and at least part of said reduction means (13) are supported by a flat frame (16) enclosed within said box-like body (11).

2. The brake according to claim 1, **characterized in that** said frame (16) is constituted by two parts made of pressed and folded sheet metal, a first lower part (17), substantially for fixing and support, and a second upper part (18), substantially for covering and coupling, for at least part of said reduction means (13) and of said distribution means (14).

3. The brake according to the preceding claims, **characterized in that** said electric motor (12) is of the reversible type.

4. The brake according to one or more of the preceding claims, **characterized in that** said reduction means (13) are reversible as a whole.

5. The brake according to the preceding claims, **characterized in that** it further comprises locking means (19) for the irreversibility of the transmission of motion and torque, which are suitable to prevent transmission from the force distribution means (14) toward the electric motor (12) by way of said reversible reduction means (13), and means (20) for the emergency manual release of said means (19) for irreversibility of transmission.

6. The brake according to one or more of the preceding claims, **characterized in that** said box-like body (11) is formed by a containment shell (21), inside which said frame (16) is arranged, and by a protective cover (22).

7. The brake according to one or more of the preceding claims, **characterized in that** it is constituted by three main subassemblies: a first subassembly, comprising said force distribution means (14) and a first part of said reduction means (13) and the frame (16) that contains them; a second subassembly, comprising said locking means (19); and a third subassembly, comprising said electric motor (12) and a second part of said reduction means (13).

8. The brake according to one or more of the preceding claims, **characterized in that** said reduction means (13) are constituted by a first reduction stage, which is formed by a worm screw which is rigidly coupled to the driving shaft of the electric motor (12) and is coupled to a first sprocket (23); by a second reduction stage, which is formed by a second sprocket (24) which is fixed coaxially to said first sprocket (23) and is suitable to engage a gear (25) of said locking means (19) for the input of the torque in said locking means (19), said means having a torque output pinion (26) which is coaxial and rigidly coupled to said gear (25), said pinion in turn meshing with a third sprocket (27) so as to constitute a third reduction stage, said third sprocket (27) being rigidly coupled coaxially to an additional pinion (28) of a fourth reduction stage, which engages a toothed sector (29), which is pivoted to the frame (16) and on the body of which said force distribution means (14) are pivoted.

9. The brake according to one or more of the preceding claims, **characterized in that** said force distribution means (14) are constituted by a rocker (30) with a pivot (31) which performs a translational motion in a guide (33) and is moved by a linkage (32), two traction cables (15) directed toward the wheels to be locked being rigidly coupled to said rocker (30).

10. The brake according to one or more of the preceding claims, **characterized in that** said first subassembly is formed by the two parts (17, 18) of the frame (16), by the distribution means (14) arranged between said two parts (17, 18), by the toothed sector (29) complete with a pivot (34) for connecting the distribution means (14) and the corresponding bearing (35), by said third sprocket (27) and by the additional pinion (28) associated therewith, and by an element (36) which has an annular portion (36a) for supporting the manual release means (20), an opening (36b) for accommodating said additional pinion (28), and a seat (36c) for the pivot of said toothed sector (29), said element (36) being preset for fixing thereon said locking means (19).

11. The brake according to one or more of the preceding claims, **characterized in that** said second subassembly is constituted by said locking means (19) for irreversibility of the transmission of motion and torque.

12. The brake according to one or more of the preceding claims, **characterized in that** said third subassembly is constituted by said electric motor (12).

13. The brake according to claim 12, **characterized in that** said third subassembly also comprises said first sprocket (23).

14. The brake according to one or more of claims 12 and 13, **characterized in that** said third subassembly comprises an electronic control unit (37), which is rigidly coupled to the electric motor (12).

15. The brake according to one or more of the preceding claims, **characterized in that** said locking means (19) are of the type with a helical friction spring.

16. The brake according to claim 15, **characterized in that** said locking means (19) are constituted by a central body (38), which is extended axially and rigidly with respect to said gear (25) and is suitable to be arranged within a cup-shaped element (39) provided with two lateral openings (40), in which corresponding protrusions are arranged which protrude radially from said central body (38), said protrusions being suitable, during a rotation imparted to the gear (25), to press against a lateral rim of the corresponding opening (40) a respective end (41) of a helical spring (42) arranged so as to surround said cup-shaped element (39), said ends (41) being folded inward and available for grip, said spring (42), the cup-shaped element (39) which is concentric thereto, and the central body (38) being contained within a complementarily shaped concavity (43) of a back plate (44) which is suitable to be fixed, by means of its perimetric flaps (44a), below said element (36), at least two plate-like wings (45) protruding symmetrically from said cup-shaped element (39) and being suitable to pass through said gear (25) in an axial direction by way of corresponding slotted holes shaped like a circular arc, said wings (45) being suitable to engage complementarily shaped slots (46) provided in a flange (47) for connection to said torque output pinion (26), said gear (25) and said output pinion (26) being pivoted coaxially to a same pivot (48), which passes through said central body (38).

17. The brake according to one or more of the preceding claims, **characterized in that** said second sprocket (24) and said gear (25) are made of plastic material.

18. The brake according to one or more of the preceding claims, **characterized in that** said distribution means (14), said toothed sector (29) and said additional pinion (28) are substantially coplanar and are arranged within the frame (16).

19. The brake according to one or more of the preceding claims, **characterized in that** said third sprocket (27) and said pinion (26) for the output of the torque from the locking means (19) are substantially coplanar directly below the first lower part (17) of the frame (16).

20. The brake according to one or more of the preceding claims, **characterized in that** said gear (25) and said second sprocket (24) are coplanar.

21. The brake according to one or more of the preceding claims, **characterized in that** said first, second and third reduction stages each lie on planes which are mutually close so as to give the brake (10) a predominantly two-dimensional shape.

22. The brake according to one or more of the preceding claims, **characterized in that** a receptacle (49) for said concavity (43) of the back plate (44) and the guide (33) for the pivot (31) of the rocker (30) are formed within said containment shell (21).

23. The brake according to one or more of the preceding claims, **characterized in that** said containment shell (21) is made of plastic material.

24. The brake according to one or more of the preceding claims, **characterized in that** said cover (22) is made of plastic material.

25. The brake according to one or more of the preceding claims, **characterized in that** said release means (20) are constituted by a knob (51), with which a release pinion (53) is associated which is supported by means for its reversible manual engagement with an internal set of teeth (52) of the gear (25), said manual release means (20) being suitable to allow the release of the braking action if there is no power supply for said reversible electric motor (12).

26. The brake according to claim 25, **characterized in that** said means for the reversible manual engagement of the release pinion (53) are constituted by a knob (51), from which an axial stem (54) protrudes, said pinion (53) being provided at the end of said stem, said knob (51) being associated, by way of removable interlocking means, with an opening (55) on said frame (16) which faces said corresponding gear (25) of the reduction means (13), with which the release pinion (53) can be engaged detachably, elastic contrast means being interposed between said knob (51) and said annular portion (36a), which forms the opening (55), and being suitable to facilitate the resetting of the disengaged configuration for said pinion (53).

27. The brake according to claim 26, **characterized in that** said removable snap-acting interlocking means are constituted by at least one pair of elastically deformable tabs (56), which protrude from said knob (51) symmetrically and parallel to said stem (54) toward the inside of said opening (55) and are provided at the end with a tooth (57) for snap engagement with selectively one of two undercuts which are axially consecutive, a first undercut (58) for a first configuration for disengagement of the pinion (53) from the gear (25) of the reduction means, and a second undercut (59), which lies closer to said corresponding gear (25), for a second engagement configuration of the pinion (53) with said corresponding gear (25).

28. The brake according to one or more of the preceding claims, **characterized in that** said knob (51) is formed by a substantially cylindrical body which is provided, at its free end, with an ergonomic perimetric portion (60), which is suitable to be gripped manually by a user, a contoured seat (62) for accommodating said elastic contrast means being formed inside said cylindrical body, between its outer annular jacket (61) and the elastically deformable tabs (56).

29. The brake according to one or more of the preceding claims, **characterized in that** said elastic contrast means are constituted by a helical compression spring (63), which is pressed between the bottom of said seat (62) and a corresponding abutment (64) on the outer rim of said opening (55), said opening being formed by said annular portion (36a) in order to fit between said outer annular jacket (61) and said tabs (56) of said knob (51), said first undercut (58) and said second undercut (59) being formed on the substantially cylindrical internal surface of said opening (55).

30. The brake according to one or more of the preceding claims, **characterized in that** said knob (51) is provided, coaxially to said ergonomic perimetric portion (60), with a flush-fit compartment (65), inside which a contoured head (66) protrudes for the handling of said knob (51) by means of a corresponding complementarily shaped tool.

31. The brake according to claim 30, **characterized in that** said head (66) is hexagonal.

32. The brake according to one or more of the preceding claims, **characterized in that** said release pinion (53) can engage the corresponding gear (25) of the reduction means (13) by way of a first pressure on the knob (51) to move said pinion from the disengaged configuration to the engaged configuration, and a second rotation for producing a torque which releases the braking action, said pinion (53) being suitable to be disengaged by means of a third pulling action on the knob (51), which is suitable to return the pinion (53) to the disengaged configuration.

33. The brake according to claim 32, **characterized in that** said first and second actions can be performed directly by hand or with the aid of a tool.

34. The brake according to one or more of the preceding claims, **characterized in that** the outer annular jacket (61), the stem (54), the pinion (53), the tabs (56), the ergonomic portion (60) and the contoured head (66) of said knob (51) are monolithic.

35. The brake according to one or more of the preceding claims, **characterized in that** the internal set of teeth (52) of the gear (25) can be arranged so as to engage said release pinion (53), while the external set of teeth (67) of said gear (25) is suitable to receive motion from said electric motor (12), either directly or by interposing at least one reduction stage, said gear (25) being an integral part of said locking means for irreversibility for motion and torque transmission.

36. The device according to one or more of the preceding claims, **characterized in that** said electric motor (12), said reduction means (13) and said locking means are always mutually engaged.

37. The device according to one or more of the preceding claims, **characterized in that** said knob (51) is obtained by molding plastic material.

38. The device according to one or more of the preceding claims, **characterized in that** said gear (25) is obtained by molding plastic material.

## Patentansprüche

1. Eine elektrische Parkbremse, insbesondere für Autos, die zumindest teilweise in einem schützenden behälterartigen Körper (11) angeordnet und ausgestattet ist mit einem elektrischen Betätigungsmotor (12), der funktional durch Zwischenschalten eines Reduziermittels (13) und eines Kraft-Verteilungsmittels (14) mit zumindest einem Traktionskabel (15) zum Betätigen der Bremsoperation an zugehörigen Rädern des Autos verbunden ist, **dadurch gekennzeichnet, dass** das Kraft-Verteilungsmittel (14) und zumindest ein Teil der Reduziermittel von einem flachen Rahmen (16) gehalten werden, der in dem behälterartigen Körper (11) angeordnet ist.

2. Die Bremse nach Anspruch 1, **dadurch gekennzeichnet, dass** der Rahmen (16) ausgestattet ist mit zwei Teilen, die aus gepresstem und gefaltetem Blech hergestellt sind, einem ersten unteren Teil (17), der im Wesentlichen dem Fixieren und dem Stützen dient, und einem zweiten oberen Teil (18), der im Wesentlichen zum Abdecken und zum Verbinden von zumindest einem Teil des Reduziermittels (13) und des Verteilungsmittels (14) dient.

3. Die Bremse nach den vorstehenden Ansprüchen, **dadurch gekennzeichnet, dass** der elektrische Motor (12) ein Typ mit umkehrbarer Drehrichtung ist.

4. Die Bremse nach einem oder mehreren der vorstehenden Ansprüche, **dadurch gekennzeichnet, dass** die Reduziermittel (13) als Ganzes umkehrbar sind.

5. Die Bremse gemäß den vorstehenden Ansprüchen, **dadurch gekennzeichnet, dass** sie zudem ausgestattet ist mit einem Verriegelungsmittel (19) für die Unumkehrbarkeit der Übertragung von Bewegung und Drehmoment, die geeignet sind, um eine Übertragung von den Kraft-Verteilungsmitteln (14) auf den elektrischen Motor (12) mittels des umkehrbaren Reduziermittels (13) zu verhindern, und Mitteln (20) zum manuellen Lösen des Mittels (19) für die Unumkehrbarkeit der Übertragung im Notfall.

6. Die Bremse nach einem oder mehreren der vorstehenden Ansprüche, **dadurch gekennzeichnet, dass** der behälterartige Körper (11) gebildet ist durch einen Behälter-Mantel (21), in dem der Rahmen (16) angeordnet ist, und durch eine schützende Abdeckung (22).

7. Die Bremse nach einem oder mehreren der vorstehenden Ansprüche, **dadurch gekennzeichnet, dass** sie aus drei hauptsächlichen Baugruppen aufgebaut ist: einer ersten Baugruppe, die das Kraft-Verteilungsmittel (14) und einen ersten Teil des Reduziermittels (13) und den Rahmen (16), der diese enthält, aufweist; eine zweite Baugruppe, die das Verriegelungsmittel (19) aufweist; und eine dritte Baugruppe, die den elektrischen Motor (12) und einen zweiten Teil des Reduziermittels (13) aufweist.

8. Die Bremse nach einem oder mehreren der vorstehenden Ansprüche, **dadurch gekennzeichnet, dass** das Reduziermittel (13) aufgebaut ist aus einer ersten Reduzier-Stufe, die von einer Madenschraube gebildet ist, die steif mit der Antriebswelle des elektrischen Motors (12) verbunden ist und die mit einem ersten Zahnkranz (23) verbunden ist; einer zweiten Reduzier-Stufe, die von einem zweiten Zahnkranz (24) gebildet ist, der koaxial an dem ersten Zahnkranz (23) befestigt ist und der geeignet ist, um mit einem Ritzel (25) des Verriegelungsmittel (19) zu kämmen, um ein Drehmoment in das Verriegelungsmittel (19) einzuleiten, wobei das Mittel ein Drehmoment-Abtriebs-Zahnrad (26) aufweist, das koaxial und fest mit dem Ritzel (25) gekoppelt ist, wobei das Zahnrad wiederum mit einem dritten Zahnkranz (27) kämmt, um so eine dritte Reduzier-Stufe zu bilden, wobei der dritte Zahnkranz (27) fest koaxial mit einem zusätzlichen Zahnrad (28) einer vierten Reduzier-Stufe gekoppelt ist, die mit einem gezähnten Sektor (29) in Eingriff steht, der schwenkbar an dem Rahmen (16) und an dem Körper befestigt ist, an dem das Kraftverteilungsmittel (14) schwenkbar befestigt ist.

9. Die Bremse nach einem oder mehreren der vorstehenden Ansprüche, **dadurch gekennzeichnet, dass** die Kraft-Verteilungsmittel (14) aufgebaut sind aus einer Schwinge (30) mit einer Achse (31), die eine Translationsbewegung in einer Führung (33) ausführt und von einer Anlenkung (32) bewegt wird, zwei Traktionskabeln (15), die auf die Räder zu verlaufen, die zu verriegeln sind und fest mit der Schwinge (30) verbunden sind.

10. Die Bremse nach einem oder mehreren der vorstehenden Ansprüche, **dadurch gekennzeichnet, dass** die erste Baugruppe gebildet ist durch die beiden Teile (17, 18) des Rahmens (16), durch das Kraft-Verteilungsmittel (14), das zwischen den beiden Teilen (17, 18) angeordnet ist, durch den gezähnten Abschnitt (29) zusammen mit einer Achse (34) zum Verbinden der Verteilungsmittel (14) und der zugehörigen Lagerung (35), durch den dritten Zahnkranz (27) und durch das zusätzliche Zahnrad (28), das damit in Verbindung steht, und durch ein Element (36), das einen kreisbogenförmigen Abschnitt (36a) zum Stützen des Entriegelungsmittels (20), eine Öffnung (36b) zum Aufnehmen des zusätzlichen Zahnrads (28) und einen Sitz (36c) für die Achse des gezähnten Sektors (29) hat, wobei das Element (36) vorgesehen ist, um darauf das Verriegelungsmittel (19) zu befestigen.

11. Die Bremse nach einem oder mehreren der vorstehenden Ansprüche, **dadurch gekennzeichnet, dass** die zweite Baugruppe aufgebaut ist aus den Verriegelungsmitteln (19), um die Nicht-Umkehrbarkeit der Übertragung und des Drehmoments zu erreichen.

12. Die Bremse nach einem oder mehreren der vorstehenden Ansprüche, **dadurch gekennzeichnet, dass** die dritte Baugruppe den elektrischen Motor (12) umfasst.

13. Die Bremse nach Anspruch 12, **dadurch gekennzeichnet, dass** die dritte Baugruppe zudem den ersten Zahnkranz (23) umfasst.

14. Die Bremse gemäß einem oder mehreren der Ansprüche 12 und 13, **dadurch gekennzeichnet, dass** die dritte Baugruppe eine elektronische Steuereinheit (37) umfasst, die fest mit dem elektrischen Motor (12) gekoppelt ist.

15. Die Bremse nach einem oder mehreren der vorhergehenden Ansprüche, **dadurch gekennzeichnet, dass** das Verriegelungsmittel (19) von einem solchen Typ ist, der eine schneckenförmige Reibungsfeder umfasst.

16. Die Bremse gemäß Anspruch 15, **dadurch gekennzeichnet, dass** das Verriegelungsmittel (19) aufgebaut ist aus einem zentralen Körper (38), der sich axial erstreckt und starr ist in Bezug auf das Ritzel (25) und der geeignet ist, um innerhalb eines napfartigen Elements (39) angeordnet zu werden, das zwei seitliche Öffnungen (40) aufweist, in denen zugehörige Vorsprünge angeordnet sind, die radial von dem zentralen Körper (38) abstehen, wobei die Vorsprünge geeignet sind, um während einer Drehung, die in das Ritzel (25) eingeprägt ist, gegen einen seitlichen Rand der zugehörigen Öffnung (40) eines entsprechenden Endes (41) einer schneckenförmigen Feder (42) zu drücken, die so angeordnet ist, dass sie das napfförmige Element (39) umgibt, wobei die Enden (41) einwärts gefaltet sind und für einen Eingriff verfügbar sind, wobei die Feder (42) das napfförmige Element (39), das dazu konzentrisch angeordnet ist, und der zentrale Körper (38) in einer komplementär geformten Wölbung (43) einer Rückenplatte (44) angeordnet sind, die geeignet ist, um, mittels ihrer am Umfang angeordneten Klappen (44a) unterhalb des Elements (36) befestigt zu werden, wobei zumindest zwei plattenförmige Flügel (45) symmetrisch von den napfförmigen Elementen (39) abstehen und geeignet sind, um durch das Ritzel (25) in eine axiale Richtung durch zugehörige geschlitzte Löcher, die wie ein kreisförmiger Bogen geformt sind, hindurch zu treten, wobei die Flügel (45) geeignet sind, um in komplementär geformte Schlitze (46) einzugreifen, die einem Flansch (47) zum Verbinden mit dem Drehmoment-Abtriebs-Zahnrad (26) vorgesehen sind, wobei das Ritzel (25) und das Abtriebs-Zahnrad (26) koaxial an der gleichen Achse (48) angelenkt sind, die durch den zentralen Körper (38) verläuft.

17. Die Bremse nach einem oder mehreren der vorstehenden Ansprüche, **dadurch gekennzeichnet, dass** der zweite Zahnkranz (24) und das Ritzel (25) aus Plastikmaterial hergestellt sind.

18. Die Bremse nach einem oder mehreren der vorstehenden Ansprüche, **dadurch gekennzeichnet, dass** das Verteilungsmittel (14), der gezähnte Abschnitt (29) und das zusätzliche Zahnrad (28) im Wesentlichen koplanar sind und innerhalb des Rahmens (16) angeordnet sind.

19. Die Bremse nach einem oder mehreren der vorstehenden Ansprüche, **dadurch gekennzeichnet, dass** der dritte Zahnkranz (27) und das Zahnrad (26) zum Abgeben des Drehmoments von dem Verriegelungsmittel (19) im Wesentlichen koplanar angeordnet sind und direkt unterhalb des ersten unteren Teils (17) des Rahmens (16) verlaufen.

20. Die Bremse nach einem oder mehreren der vorstehenden Ansprüche, **dadurch gekennzeichnet, dass** das Ritzel (25) und der zweite Zahnkranz (24) koplanar angeordnet sind.

21. Die Bremse nach einem oder mehreren der vorstehenden Ansprüche, **dadurch gekennzeichnet, dass** die erste, die zweite und die dritte Reduzierstufe jeweils auf Ebenen liegen, die gegenseitig dicht beieinander liegen, so dass die Bremse (10) eine im Wesentlichen zweidimensionale Gestalt hat.

22. Die Bremse nach einem oder mehreren der vorstehenden Ansprüche, **dadurch gekennzeichnet, dass** eine Aufnahme für die Wölbung (43) der Rückenplatte (44) und der Führung (33) für die Achse (31) der Schwinge (30) innerhalb des Behälter-Mantels (21) ausgeformt ist.

23. Die Bremse nach einem oder mehreren der vorstehenden Ansprüche, **dadurch gekennzeichnet, dass** der Behälter-Mantel (21) aus Plastikmaterial besteht.

24. Die Bremse nach einem oder mehreren der vorstehenden Ansprüche, **dadurch gekennzeichnet, dass** die Abdeckung (22) aus Plastikmaterial besteht.

25. Die Bremse nach einem oder mehreren der vorstehenden Ansprüche, **dadurch gekennzeichnet, dass** das Entriegelungsmittel (20) aufgebaut ist aus einem Knopf (51), mit dem ein Entriegelungs-Zahnrad (53) in Verbindung steht, das von einem Mittel zum reversiblen In-Eingriff-Bringen mit einem innen liegenden Satz an Zähnen (52) des Ritzels (25) gehalten wird, wobei das manuelle Entriegelungsmittel (20) geeignet ist, um das Entriegeln der Bremsenbetätigung zu erlauben, wenn der in seiner Drehrichtung umkehrbare elektrische Motor (12) nicht mit Strom versorgt ist.

26. Die Bremse nach Anspruch 25, **dadurch gekennzeichnet, dass** die Mittel zum reversiblen In-Eingriff-Bringen mit dem Zahnrad (53) gebildet sind durch einen Knopf (51), von dem ein axialer Schaft (54) vorspringt, wobei das Zahnrad (53) an einem Ende des Schafts vorgesehen ist, wobei der Knopf (51) mittels eines entfernbaren Verriegelungsmittels mit einer Öffnung (55) an dem Rahmen (16) in Verbindung steht, der gegenüber dem zugehörigen Ritzel (25) des Reduziermittels (13) angeordnet ist, mit dem das Entriegelungs-Zahnrad (53) lösbar eingriffbringbar ist, wobei elastische Kontrastmittel zwischen dem Knopf (51) und dem kreisringförmigen Abschnitt (36a) angeordnet sind, der die Öffnung (55) bildet und der geeignet ist, um das Rücksetzen der außer Eingriff befindlichen Konfiguration des Zahnrads (53) ermöglicht.

27. Die Bremse nach Anspruch 26, **dadurch gekennzeichnet, dass** die entfernbaren, durch Einschnappen wirkenden Verriegelungsmittel aufgebaut sind aus zumindest einem Paar elastisch deformierbarer Nasen (56), die von dem Knopf (51) symmetrisch und parallel zu dem Schaft (54) auf eine Innenseite der Öffnung (55) zu vorstehen und die an dem Ende mit einem Zahn (57) zum einschnappenden Eingreifen mit einem von zwei Hinterschnitten versehen sind, die axial hintereinander angeordnet sind, wobei ein erster Hinterschnitt (58) für eine erste Konfiguration zum Außen-Eingriff-Bringen des Zahnrads (53) von dem Ritzel (25) des Reduziermittels vorgesehen ist, und wobei ein zweiter Hinterschnitt (59) vorgesehen ist, der dichter bei dem zugehörigen Ritzel (25) angeordnet ist, um eine zweite Eingriffs-Konfiguration des Zahnrads (53) mit dem Ritzel (25) zu ermöglichen.

28. Die Bremse nach einem oder mehreren der vorstehenden Ansprüche, **dadurch gekennzeichnet, dass** der Knopf (51) durch einen im Wesentlichen zylinderförmigen Körper gebildet ist, der an seinem freien Ende mit einem ergonomischen, sich um seinen Umfang erstreckenden Abschnitt (60) versehen ist, der geeignet ist, um von einem Benutzer mit der Hand ergriffen zu werden, und der einen konturierten Sitz (62) zum Aufnehmen des elastischen Kontrastmittels aufweist, das in dem zylinderförmigen Körper zwischen seinem äußeren ringförmigen Mantel (61) und den elastisch deformierbaren Nasen (56) ausgebildet ist.

29. Die Bremse nach einem oder mehreren der vorstehenden Ansprüche, **dadurch gekennzeichnet, dass** die elastischen Konstrastmittel bzw. Vergleichsmittel aufgebaut sind aus einer spiralförmigen Druckfeder (63), die zwischen dem Boden des Sitzes (62) und einem zugehörigen Vorsprung (64) auf dem äußeren Rand der Öffnung (55) zusammengedrückt ist, wobei die Öffnung durch einen kreisförmigen Abschnitt (36a) gebildet ist, um zwischen dem äußeren ringförmigen Mantel (61) und den Nasen (56) des Knopfes (51) zu passen, wobei der erste Hinterschnitt (58) und der zweite Hinterschnitt (59) auf der im Wesentlichen zylinderförmigen inneren Oberfläche der Öffnungen (55) ausgebildet sind.

30. Die Bremse nach einem oder mehreren der vorstehenden Ansprüche, **dadurch gekennzeichnet, dass** der Knopf (51) vorgesehen ist, um sich koaxial zu dem ergonomischen, um den Umfang erstreckenden Abschnitt (60) zu erstrecken, wobei er ein bündiges Kompartiment (65) aufweist, in dem ein konturierter Kopf (66) vorsteht, um den Knopf (51) mittels einem korrespondierenden, komplementär geformten Werkzeug bedienen zu können.

31. Die Bremse nach Anspruch 30, **dadurch gekennzeichnet, dass** der Kopf (66) sechseckig ist.

32. Die Bremse nach einem oder mehreren der vorstehenden Ansprüche, **dadurch gekennzeichnet, dass** das Entriegelungs-Zahnrad (53) mit dem zugehörigen Ritzel (25) des Reduziermittels (13) in Eingriff gebracht werden kann durch einen ersten Druck auf den Knopf (51), um das Zahnrad aus der ausgerückten Konfiguration in die eingerückte Konfiguration zu bewegen und durch eine zweite Drehung zum Erzeugen eines Drehmoments, das die Bremsaktion entriegelt bzw. startet, wobei das Zahnrad (53) geeignet ist, um durch eine dritte, ziehende Aktion an dem Knopf (51) ausgerückt zu werden, die geeignet ist, um das Zahnrad (53) in die ausgerückte Konfiguration zu bringen.

33. Die Bremse nach Anspruch 32, **dadurch gekennzeichnet, dass** die erste und die zweite Aktion direkt von Hand oder mit Hilfe eines Werkzeugs ausgeführt werden kann.

34. Die Bremse nach einem oder mehreren der vorstehenden Ansprüche, **dadurch gekennzeichnet, dass** der äußere ringförmige Mantel (61), der Schaft (54), das Zahnrad (53), die Nasen (56), der ergonomische Abschnitt (60) und der konturierte Kopf (66) des Knopfes (51) monolithisch ausgebildet sind.

35. Die Bremse nach einem oder mehreren der vorstehenden Ansprüche, **dadurch gekennzeichnet, dass** der innen liegende Satz an Zähnen (52) des Ritzels (25) so angeordnet werden kann, dass es in das Entriegelungs-Zahnrad (53) eingreift, während ein außen liegender Satz an Zähnen (67) des Ritzels (25) geeignet ist, um eine Bewegung von dem elektrischen Motor (12) aufzunehmen, was entweder direkt oder durch Zwischenschaltung von zumindest einer Reduzier-Stufe erfolgt, wobei das Ritzel (25) ein integraler Bestandteil des Verriegelungsmittels zum Herstellen der Unumkehrbarkeit der Bewegung und der DrehmomentÜbertragung ist.

36. Die Vorrichtung nach einem oder mehreren der vorstehenden Ansprüche, **dadurch gekennzeichnet, dass** der elektrische Motor (12), das Reduziermittel (13) und das Verriegelungsmittel stets miteinander in Eingriff stehen.

37. Die Vorrichtung nach einem oder mehreren der vorstehenden Ansprüche, **dadurch gekennzeichnet, dass** der Knopf (51) durch Spritzgießen von Plastikmaterial erhalten wird.

38. Die Vorrichtung nach einem oder mehreren der vorstehenden Ansprüche, **dadurch gekennzeichnet, dass** das Ritzel (25) durch Spritzgießen von Kunststoffmaterial erhalten worden ist.

## Revendications

1. Frein de stationnement électrique, en particulier pour voitures, qui est content au moins en partie dans un corps protecteur (11) en forme de boîte et comprend un moteur d'actionnement électrique (12), qui est connecté fonctionnellement, par interposition de moyens réducteurs (13) et de moyens distributeurs de force (14), à au moins un câble de traction (15) pour actionner l'opération de freinage sur les roues correspondantes de la voiture, **caractérisé en ce que** lesdits moyens distributeurs de force (14) et au moins une partie desdites moyens réducteurs (13) sont supportés par un cadre plan (16) enserré dans ledit corps (11) en forme de boîte.

2. Frein selon la revendication 1, **caractérisé en ce que** ledit cadre (16) est constitué de deux parties formées de métal en feuille pressé et plié, une première partie inférieure (17) sensiblement pour fixer et supporter, et une seconde partie supérieure (18) sensiblement pour recouvrir et coupler, pour au moins une partie desdits moyens réducteurs (13) et desdits moyens de distribution (14).

3. Frein selon les revendications précédentes, **caractérisé en ce que** ledit moteur électrique (12) est du type réversibles.

4. Frein selon une ou plusieurs des revendications précédentes, **caractérisé en ce que** lesdits moyens réducteurs (13) sont réversibles dans leur ensemble.

5. Frein selon les revendications précédente, **caractérisé en ce qu'**il comprend en outre des moyens de verrouillage (19) pour l'irréversibilité de la transmission du mouvement et du couple de torsion, qui conviennent pour empêcher la transmission des moyens distributeurs de force (14) au moteur électrique (12) au moyen desdits moyens réducteurs réversibles (13), et des moyens (20) pour la libération manuelle d'urgence desdits moyens (19) pour l'irréversibilité de la transmission.

6. Frein selon une ou plusieurs des revendications précédentes, **caractérisé en ce que** ledit corps (11) en forme de boîte est formé d'une coque de confinement (21), à l'intérieur de laquelle ledit cadre (16) est aménagé, et d'un couvercle protecteur (22).

7. Frein selon une ou plusieurs des revendications précédentes, **caractérisé en ce qu'**il est constitué de trois sous-ensembles principaux: un premier sous-ensemble comprenant lesdits moyens distributeurs de force (14) et une première partie desdits moyens réducteurs (13) et le cadre (16) qui les contient ; une deuxième sous-ensemble comprenant lesdits moyens de verrouillage (19) ; et un troisième sous-ensemble comprenant ledit moteur électrique (12) et une seconde partie desdits moyens réducteurs (13).

8. Frein selon une ou plusieurs des revendications précédentes, **caractérisé en ce que** lesdits moyens réducteurs (13) sont constitués d'un premier étage réducteur, qui est formé d'une vis sans fin couplée de manière rigide à l'arbre d'entraînement du moteur électrique (12) et qui est couplée à une première couronne dentée (23) ; d'un deuxième étage réducteur qui est formé d'une deuxième couronne dentée (24) qui est fixée coaxialement à ladite première couronne dentée (23) et convient pour s'engager sur une roue dentée (25) desdits moyens de verrouillage (19) pour l'entrée du couple de torsion dans lesdits moyens de verrouillage (19), lesdits moyens ayant un pignon de sortie de couple de torsion (26) qui est coaxial et couplé de manière rigide à ladite roue dentée (25), ledit pignon venant à son tour en prise avec une troisième couronne dentée (27) de manière à constituer un troisième étage réducteur, ladite troisième couronne dentée (27) étant couplée de manière rigide coaxialement à un pignon supplémentaire (28) d'un quatrième étage réducteur, qui s'engage sur un secteur denté (29), qui est articulé sur le cadre (16) et sur le corps duquel lesdits moyens distributeurs de force (14) sont articulés.

9. Frein selon une ou plusieurs des revendications précédentes, **caractérisé en ce que** lesdits moyens distributeurs de force (14) sont constitués d'un culbuteur (30) avec un pivot (31) qui effectue un mouvement de translation dans un guide (33) et est déplacé par une bielle (32), deux câbles de traction (15) dirigés vers les roues à verrouiller étant couplés de manière rigide audit culbuteur (30).

10. Frein selon une ou plusieurs des revendications précédentes, **caractérisé en ce que** ledit premier sous-ensemble est formé des deux parties (17, 18) du cadre (16), des moyens distributeurs (14) aménagés entre lesdites deux parties (17, 18), du secteur denté (29) complet avec un pivot (34) pour raccorder les moyens distributeurs (14) et le palier correspondant (35), de ladite troisième couronne dentée (27) et du pignon supplémentaire (28) qui lui est associé, et d'un élément (36) qui a une partie annulaire (36a) pour supporter les moyens (20) de libération manuelle, une ouverture (36b) pour recevoir ledit pignon supplémentaire (28) et un siège (36c) pour le pivot du secteur denté (29), ledit élément (36) étant préalablement réglé pour y fixer lesdits moyens de verrouillage (19).

11. Frein selon une ou plusieurs des revendications précédentes, **caractérisé en ce que** ledit deuxième sous-ensemble est constitué desdits moyens de verrouillage (19) pour l'irréversibilité de la transmission du mouvement et du couple de torsion.

12. Frein selon une ou plusieurs des revendications précédentes, **caractérisé en ce que** ledit troisième sous-ensemble est constitué dudit moteur électrique (12).

13. Frein selon la revendication 12, **caractérisé en ce que** ledit troisième sous-ensemble comprend également ladite première couronne dentée (23).

14. Frein selon une ou plusieurs des revendications 12 et 13, **caractérisé en ce que** ledit troisième sous-ensemble comprend une unité de commande électronique (37), qui est couplé de manière rigide au moteur électrique (12).

15. Frein selon une ou plusieurs des revendications précédentes, **caractérisé en ce que** lesdits moyens de verrouillage (19) sont du type avec un ressort de friction hélicoïdal.

16. Frein selon la revendication 15, **caractérisé en ce que** lesdits moyens de verrouillage (19) sont constitués d'un corps central (38), qui est étendu axialement de manière rigide par rapport à ladite roue dentée (25) et convient pour être aménagé dans un élément (39) en forme de coupe, pourvu de deux ouvertures latérales (40), dans lesquelles sont aménagées des saillies correspondantes qui font saillie radialement dudit corps central (38), lesdites saillies convenant, au cours d'une rotation communiquée à la roue dentée (25), pour presser contre un rebord de l'ouverture correspondante (40) une extrémité respective (41) d'un ressort hélicoïdal (42) aménagé de manière à entourer ledit élément (39) en forme de coupe, lesdites extrémités (41) étant repliées vers l'intérieur et disponibles pour une prise, ledit ressort (42), l'élément (39) en forme de coupe, qui lui est concentrique, et le corps central (38) étant contenus dans une concavité (43) de forme complémentaire d'une plaque d'appui (44), qui convient pour être fixée, au moyen de ses pattes périphériques (44a), en dessous dudit élément (36), au moins deux ailes (45) en forme de plaque saillant symétriquement dudit élément (39) en forme de coupe et convenant pour passer à travers ladite roue dentée (25) dans une direction axiale au moyen de trous rainurés correspondants conformés en arc circulaire, lesdites ailes (45) convenant pour s'engager dans des rainures (46) de forme complémentaire ménagées dans un collet (47) pour jonction avec ledit pignon de sortie de couple de torsion (26), ladite roue dentée (25) et ledit pignon de sortie (26) étant articulés coaxialement sur un même pivot (48), qui passe à travers ledit corps central (38).

17. Frein selon une ou plusieurs des revendications précédentes, **caractérisé en ce que** ladite deuxième couronne dentée (24) et ladite roue dentée (25) sont formées de matière plastique.

18. Frein selon une ou plusieurs des revendications précédentes, **caractérisé en ce que** lesdits moyens distributeurs (14), ledit secteur denté (29) et ledit pignon supplémentaire (28) sont sensiblement coplanaires et sont aménagés dans le cadre (16).

19. Frein selon une ou plusieurs des revendications précédentes, **caractérisé en ce que** ladite troisième couronne dentée (27) et ledit pignon (26) pour la sortie du couple de torsion des moyens de verrouillage (19) sont sensiblement coplanaires directement en dessous de la première partie inférieure (17) du cadre (16).

20. Frein selon une ou plusieurs des revendications précédentes, **caractérisé en ce que** ladite roue dentée (25) et ladite deuxième couronne dentée (24) sont coplanaires.

21. Frein selon une ou plusieurs des revendications précédentes, **caractérisé en ce que** lesdits premier, deuxième et troisième étages réducteurs se trouvent chacun dans des plans qui sont mutuellement proches de manière à donner au frein (10) une forme principalement bidimensionnelle.

22. Frein selon une ou plusieurs des revendications précédentes, **caractérisé en ce qu'**un réceptacle (49) pour ladite concavité (43) de la plaque d'appui (44) et le guide (33) pour le pivot (31) du culbuteur (30) sont formés dans ladite coque de confinement (21).

23. Frein selon une ou plusieurs des revendications précédentes, **caractérisé en ce que** ladite coque de confinement (21) est formée de matière plastique.

24. Frein selon une ou plusieurs des revendications précédentes, **caractérise en ce que** ledit couvercle (22) est formé de matière plastique,

25. Frein selon une ou plusieurs des revendications précédentes, **caractérisé en ce que** lesdits moyens de libération (20) sont constitues d'un bouton (51), avec lequel est associé un pignon de libération (53) qui est supporté en raison de son engagement manuel réversible avec un jeu interne de dents (52) de la roue dentée (25), lesdits moyens (20) de libération manuels convenant pour permettre la libération de l'action de freinage s'il n'y a pas d'alimentation en courant pour ledit moteur électrique réversible (12).

26. Frein selon la revendication 25, **caractérisé en ce que** lesdits moyens pour l'engagement manuel réversible du pignon de libération (53) sont constitués d'un bouton (51), dont une tige axiale (54) fait saillie, ledit pignon (53) étant disposé à l'extrémité de ladite tige, ledit bouton (51) étant associé, via des moyens d'enclenchement amovibles, à une ouverture (55) sur ledit cadre (16), qui est en regard de ladite roue dentée correspondante (25) des moyens réducteurs (13), avec laquelle le pignon de libération (53) peut être engagé de manière détachable, des moyens de contraste élastiques étant intercalés entre ledit bouton (51) et ladite partie annulaire (36a), qui forme l'ouverture (55), et convenant pour faciliter la remise à zéro de la configuration dégagée pour ledit pignon (53).

27. Frein selon la revendication 26, **caractérisé en ce que** lesdits moyens d'enclenchement encliquetables amovibles sont constitués d'au moins une paire de pattes à déformation élastique (56), qui font saillie dudit bouton (51) de manière symétrique et parallèlement à ladite tige (54) vers l'intérieur de ladite ouverture (53) et sont pourvues à extrémité d'une dent (57) pour un engagement par encliquetage avec une de deux découpes qui sont axialement consécutives, une première découpe (58) pour une première configuration pour le dégagement du pignon (53) de la roue dentée (25) des moyens réducteurs, et une seconde découpe (59), qui est plus proche de ladite roue dentée correspondante (25) pour une seconde configuration d'engagement du pignon (53) avec ladite roue dentée correspondante (25).

28. Frein selon une ou plusieurs des revendications précédentes, **caractérisé en ce que** ledit bouton (51) est formé d'un corps sensiblement cylindrique qui est pourvu à son extrémité libre, d'une partie périphérique ergonomique (60), qui convient pour être saisie manuellement par un utilisateur, un siège à contour (62) pour recevoir lesdits moyens de contraste élastiques qui est formé à l'intérieur du corps cylindrique, entre sa chemise annulaire externe (61) et les pattes à déformation élastique (56).

29. Frein selon une ou plusieurs des revendications précédentes, **caractérisé en ce que** lesdits moyens de contraste élastiques sont constitués d'un ressort de compression hélicoïdal (63), qui est pressé entre le fond dudit siège (62) et une butée correspondante (64) sur le rebord externe de ladite ouverture (55), ladite ouverture étant formée par ladite partie annulaire (36a) afin de s'ajuster entre ladite chemise annulaire externe (61) et lesdites pattes (56) dudit bouton (51), ladite première découpe (58) et ladite seconde découpe (59) étant formées sur la surface interne sensiblement cylindrique de ladite ouverture (55).

30. Frein selon une ou plusieurs des revendications précédentes, **caractérisé en ce que** ledit bouton (51) est pourvu, coaxialement à ladite partie périphérique ergonomique (60), d'un compartiment encastré (65), à l'intérieur duquel une tête à contour (66) fait saillie pour la manipulation dudit bouton (51) au moyen d'un outil correspondant de forme complémentaire.

31. Frein selon la revendication 30, **caractérisé en ce que** ladite tête (66) est hexagonale.

32. Frein selon une ou plusieurs des revendications précédentes, **caractérisé en ce que** ledit pignon de libération (53) peut s'engager sur la roue doutée correspondante (25) des moyens réducteurs (13) au moyen d'une première pression sur le bouton (51) pour déplacer ledit pignon (53) de la configuration dégagée à la configuration engagée et d'une deuxième rotation pour produire un couple de torsion qui libère l'action de freinage, ledit pignon (53) convenant pour se dégager au moyen d'une troisième action de traction sur le bouton (51), qui convient pour renvoyer le pignon (53) à la configuration dégagée.

33. Frein selon la revendication 32, **caractérisé en ce que** lesdites première et deuxième actions peuvent être assurées directement à la main ou à l'aide d'un outil.

34. Frein selon une ou plusieurs des revendications précédentes, **caractérisé en ce que** la chemise annulaire externe (61), la tige (54), le pignon (53), les pattes (56), la partie ergonomique (60) et la tête à contour (66) dudit bouton (51) sont monolithiques.

35. Frein selon une ou plusieurs des revendications précédentes, **caractérisé en ce que** le jeu interne de dents (52) de la roue dentée (25) peut être aménagé de manière à engager ledit pignon de libération (53), tandis que le jeu externe de dents (67) de ladite roue dentée (25) convient pour recevoir un mouvement dudit moteur électrique (12), directement ou en intercalant au moins un étage réducteur, ladite roue dentée était une partie intégrante desdits moyens de verrouillage pour l'irréversibilité pour la transmission d'un mouvement et d'un couple de torsion.

36. Dispositif selon une ou plusieurs des revendications précédentes, **caractérisé en ce que** ledit moteur électrique (12), lesdits moyens réducteurs (13) et lesdits moyens de verrouillage sont toujours mutuellement engagés.

37. Dispositif selon une ou plusieurs des revendications précédentes, **caractérisé en ce que** ledit bouton (51) est obtenu par montage d'une matière plastique.

38. Dispositif selon une ou plusieurs des revendications précédentes, **caractérisé en ce que** ladite roue dentée (25) est obtenue par moulage d'une matière plastique.
